# EUROPÄISCHE PATENTANMELDUNG

(11) **EP 1 138 572 A2**
(43) Veröffentlichungstag der Anmeldung: **04.10.2001**
(21) Anmeldenummer: 01101468.5
(22) Anmeldetag: 23.01.2001
(51) Int. Cl.: B62B 3/16

(54) **Verfahrbarer Ladungsträger mit Zentriervorrichtung**

(30) Priorität: 31.03.2000 DE 10016124
(71) Anmelder: Siemens Production and Logistics Systems AG, 90475 Nürnberg (DE)
(72) Erfinder: Limmer, Gerd, 90607 Rückersdorf (DE)
(74) Vertreter: Zedlitz, Peter, Dipl.-Inf.

(57) **Zusammenfassung**

Ein verfahrbarer Ladungsträger (RP) ist über eine Mittenfußzentrierung durch eine Zentriervorrichtung (ZV) geeignet, mittig zentriert sowohl Euro-Paletten als auch Industriepaletten aufzunehmen.

## Beschreibung

Die Erfindung bezieht sich auf einen verfahrbaren Ladungsträger mit Zentriervorrichtung zur Aufnahme von Paletten unterschiedlicher Abmessungen, insbesondere Euro- oder Industriepaletten, wobei die Paletten an ihrer Bodenseite spurförmig angebrachte Tragelemente aufweisen.

Als Ladungsträger haben sich Standardpaletten in vielfältigen Formen seit langem bewährt. Am häufigsten sind in der Bundesrepublik Deutschland die Europapalette (Euro-Palette) aus Holz mit den Abmessungen 800 mm x 1200 mm und die so genannte Industrie- oder Chemiepalette mit den Abmessungen 1000 mm x 1200 mm verbreitet.

Wenn Paletten in ein automatisches Lagersystem eingelagert oder aus diesem ausgelagert werden sollen und hierzu anspruchsvolle Automatisierungsmittel verwendet werden, ist es erforderlich, die Paletten auf verfahrbare Ladungsträger, beispielsweise Palettenwagen, aufzusetzen, wie diese beispielsweise aus R. Jünemann "Materialfluss und Logistik", Springer-Verlag 1989, Seite 670 bekannt sind.

Wenn auf solchen Ladungsträgern jedoch die oben genannten unterschiedlichen Palettentypen eingesetzt werden sollen, ist eine definierte Positionierung und insbesondere eine Zentrierung der Paletten auf den Ladungsträgern nicht sichergestellt.

Aus dem deutschen Gebrauchsmuster DE 29 71 47 66 U ist es zwar bekannt, durch seitlich am Ladungsträger angebrachte Mittel zum Fixieren eine definierte Positionierung der Paletten auf den Ladungsträgern zu erhalten, aber eine Zentrierung wird dadurch nicht sichergestellt, wodurch eine unsymmetrische Lastverteilung vorliegt. Weiterhin ist aus der Patentschrift JP 111 39 537 bekannt, eine Zentrierung der Paletten auf den Ladungsträgern durch von der Seite kommenden Pusher zu erreichen. Dieses Verfahren ist aber aufwendig, da es eine externe Zentriervorrichtung erfordert.

Aufgabe der Erfindung ist es, einen verfahrbaren Ladungsträger der eingangs genannten Art so auszubilden, dass eine einfache Zentrierung der Paletten auf dem Ladungsträger gewährleistet ist.

Gemäß der Erfindung wird diese Aufgabe dadurch gelöst, dass die Zentriervorrichtung mittig auf dem Ladungsträger aufgebracht ist und jeweils die mittleren spurförmig angebrachten Tragelemente fixiert.

Eine erste vorteilhafte Ausbildung der Erfindung ist dadurch gekennzeichnet, dass an der Zentriervorrichtung Schrägen für den Einschub und/oder die Aufschichtung von Paletten vorgesehen sind. Dadurch ist ein relativ ungenaues Aufsetzen der Paletten auf den Ladungsträger möglich und dennoch wird die Zentrierung der Paletten auf dem Ladungsträger mit hoher Lagegenauigkeit gewährleistet.

Eine weitere vorteilhafte Ausgestaltung der Erfindung ist dadurch gekennzeichnet, dass beim Stapeln mehrerer Ladungsträger die Vorsprünge der Zentriervorrichtung jeweils eines Ladungsträgers in Rücksprünge des Korpus des jeweils aufgestapelten Ladungsträgers formschlüssig eingreifend ausgebildet sind. Somit werden die resultierenden Stapel zum einen niedrig gehalten und zum anderen ist beim Transport von Stapeln eine hohe Sicherheit gegen Verschieben der Stapel sichergestellt.

Dadurch, dass die Zentriervorrichtung sich farblich vom Ladungsträger unterscheidet, wird das Aufsetzen der Paletten auf den Ladungsträger erleichtert (z.B. für einen Staplerfahrer).

Eine weitere vorteilhafte Ausgestaltung der Erfindung liegt darin, dass die Zentriervorrichtung als Tiefziehschale ausgebildet ist. Tiefziehteile können zum einen leicht hergestellt werden und zum anderen kann ein defektes Tiefziehteil schnell und wirtschaftlich ausgetauscht werden, wenn es z.B. über versenkbare Maschinenschrauben am Mittelholm des Ladungsträgers angebracht ist.

Eine weitere vorteilhafte Ausgestaltung der Erfindung liegt darin, dass die Zentriervorrichtung durch Führungselemente ausgebildet ist. Führungselemente lassen sich z.B. als Schienen leicht auf dem Ladungsträger anbringen. Werden die Führungselemente als Stahlschienen bzw. Stahlführungen ausgebildet, so sind sie sehr robust und gewährleisten eine lange Lebensdauer.

Eine weitere vorteilhafte Ausgestaltung der Erfindung ist dadurch gekennzeichnet, dass die Fahrrollen jeweils eines Ladungsträgers beim Aufstapeln mehrerer Ladungsträger jeweils in Aussparungen des Korpus des jeweils aufgestapelten Ladungsträgers eingreifend ausgebildet sind. Dadurch wird das dichte und formschlüssige Stapeln der Ladungsträger sichergestellt.

Ein Ausführungsbeispiel der Erfindung ist in der Zeichnung dargestellt und wird im folgenden näher erläutert. Dabei zeigen:
- FIG 1: die perspektivische Darstellung eines verfahrbaren Ladungsträgers, wobei die Zentriervorrichtung mit einer geschlossenen Umfassung ausgebildet ist,
- FIG 2: die perspektivische Darstellung eines verfahrbaren Ladungsträgers mit an den Stirnseiten offener Zentriervorrichtung und
- FIG 3: die Teilansicht einer Palette.

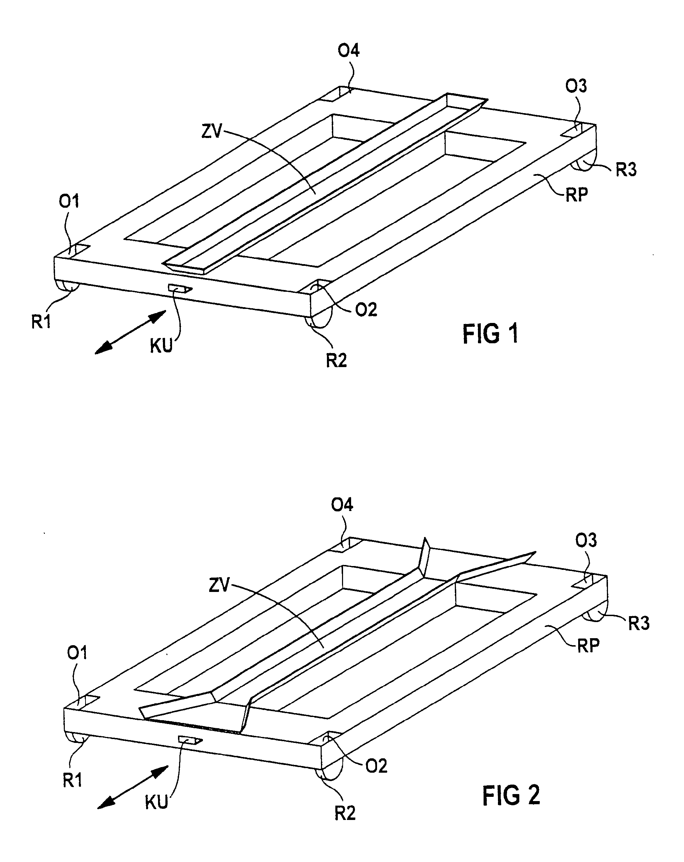

In der Darstellung gemäß FIG 1 ist ein verfahrbarer Ladungsträger, der im folgenden als Rollpalette RP bezeichnet ist, gezeigt. Diese Rollpalette RP weist dabei einen Rahmen aus Vierkant-Stahlprofil in Form einer digitalen Acht auf. In Richtung eines dargestellten Doppelpfeils kann die Rollpalette RP auf einem der Übersichtlichkeit halber nicht dargestellten Fahrweg verschoben werden. Wie durch eine auf einer dem Betrachter zugewandten Seite gezeigte Kupplung KU angedeutet, können mehrere Rollpaletten zu einem Verband zusammengekuppelt werden.

Die Rollpalette RP möge in Richtung des Fahrwegs eine Länge von etwa 1100 mm aufweisen und quer zum Fahrweg eine Breite von etwa 1280 mm. Damit kann auf die Rollpalette RP entweder eine Industriepalette von 1000 x 1200 mm aufgelegt werden oder eine Euro-Palette von 800 mm x 1200 mm. In jedem Fall wird eine derartige Palette jedoch, wie im folgenden gezeigt, durch eine Zentriervorrichtung mittig auf der Rollpalette positioniert. Die mittige Positionierung erfolgt über eine Mittenfußzentrierung durch eine mittig auf dem Ladungsträger bzw. der Rollpalette RP aufgebrachten Zentriervorrichtung ZV. Die Zentriervorrichtung ZV wird auf dem Mittelholm der Rollpalette RP angebracht und weist zum einfachen Fixieren und Aufbringen der Paletten eine flachwannenförmige Form mit schrägen Begrenzungswänden auf.

In der Darstellung gemäß FIG 2 ist ein verfahrbarer Ladungsträger, wie er aus FIG 1 bekannt ist, dargestellt. Die Zentriervorrichtung ZV ist auf dem Mittelholm der Rollpalette RP angebracht und weist zum einfachen Fixieren und Aufbringen der Paletten eine flachwannenförmige Form mit schrägen Begrenzungswänden auf, wobei diese Wanne an den Stirnseiten offen ist. Die Zentriervorrichtung ZV, wie sie in FIG 2 dargestellt ist, weist auf den Stirnseiten außerdem jeweils eine nach außen breiter werdende trichterförmige abgeflachte Auslassung auf. Dadurch wird der Einschub von Paletten und somit das Aufbringen auf der Rollpalette erleichtert.

Dadurch, dass die trichterförmigen Auslassungen an beiden Stirnseiten der Zentriervorrichtung ZV vorhanden sind, wird das leichte Aufbringen bzw. Einschieben der Paletten in Vorwärts- und Rückwärtsrichtung (der durch den Doppelpfeil angedeuteten Fahrrichtung) auf die Rollpalette RP ermöglicht. Es wäre auch denkbar, die Zentriervorrichtung nur an einer Stirnseite mit einer trichterförmigen Auslassung zu versehen, dadurch wird aber das leichte Einbringen der Paletten nur in eine Beladungsrichtung unterstützt.

Um ein seitwärtiges zentriertes Beladen eines Ladungsträgers bzw. einer Rollpalette RP zu ermöglichen, kann die Zentriervorrichtung ZV auf einem Mittelholm quer zur Fahrtrichtung der Rollpalette RP angebracht sein.

Wesentlich für die Erfindung ist nur noch, dass ein leichtes Aufeinanderstapeln mehrerer Rollpaletten dadurch ermöglicht wird, dass die Vorsprünge der Zentriervorrichtung ZV jeweils einer Rollpalette RP in Rücksprünge des Korpus der jeweils aufgestapelten Rollpalette RP formschlüssig eingreifen. Da die Rollpalette RP und auch die anderen Rollpaletten jeweils Fahrrollen aufweisen, von denen bei der dargestellten Rollpalette RP nur die Räder R1 - R3 sichtbar sind, muss jedoch dafür Sorge getragen werden, dass diese Fahrrollen beim Aufstapeln kein Hindernis darstellen. Dazu dienen bei den Rollpaletten, so der Rollpalette RP, Öffnungen 01 - 04 an der Korpusoberseite.

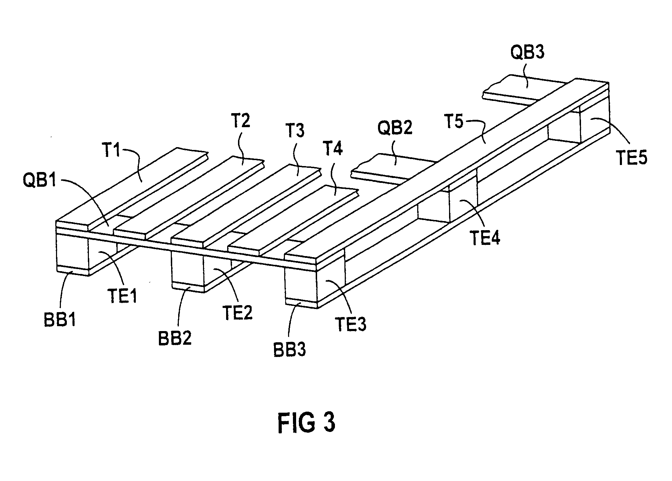

In der Darstellung gemäß FIG 3 ist der prinzipielle Aufbau einer Palette, sei es eine Euro-Palette oder eine Industriepalette, dargestellt. Typisch für die Palette ist der Aufbau, beginnend mit Bodenbrettern BB1 - BB3, auf denen jeweils drei Tragelemente TE1 - TE9 aufgesetzt werden. Die Tragelemente haben die Form von Klötzen, in FIG 2 sind aus Gründen der Übersichtlichkeit nur die Tragelemente TE1 - TE5 dargestellt. Für jedes Bodenbrett BB1 - BB3 ist jeweils am Beginn und am Ende eines Bodenbrettes ein Tragelement befestigt sowie in der Mitte des Bodenbrettes. Dies wird in FIG 2 exemplarisch am Bodenbrett BB3 gezeigt, bei dem an den Enden die Tragelemente TE3 bzw. TE5 und mittig das Tragelement TE4 angebracht sind. Die Tragelemente eines Bodenbrettes sind durch Querbretter QB1 - QB3 mit den jeweils entsprechenden Tragelementen der anderen Bodenbretter (vorne - mittig - hinten) miteinander verbunden. Auf den Querbrettern QB1 - QB3 sind die Tragbretter T1 - T5 aufgebracht. Die Industriepalette kann dabei so ausgebildet sein, dass sieben Tragbretter auf drei Querbrettern aufliegen, die über neun Tragelemente TE1 - TE9 an drei Bodenbrettern BB1 - BB3 Anschluss finden. Die Euro-Palette unterscheidet sich demgegenüber dadurch, dass an Stelle von sieben Tragbrettern nur fünf Tragbretter vorgesehen sind. Die Tragelemente sind spurförmig an der Palette und insbesondere an den Bodenbrettern angebracht. Die mittlere Spur der Tragelemente mit dem mittleren Bodenbrett wird als Führungshilfsmittel zum Aufbringen der Palette auf die Zentriervorrichtung ZV verwendet.

## Patentansprüche

1. Verfahrbarer Ladungsträger (RP) mit Zentriervorrichtung (ZV) zur Aufnahme von Paletten unterschiedlicher Abmessungen, insbesondere Euro- oder Industriepaletten, wobei die Paletten an ihrer Bodenseite spurförmig angebrachte Tragelemente (TE1 - TE9) aufweisen,
**dadurch gekennzeichnet,**
**dass** die Zentriervorrichtung (ZV) mittig auf dem Ladungsträger (RP) aufgebracht ist und jeweils die mittleren spurförmigen Tragelemente (TE1 - TE9) fixiert.

2. Verfahrbarer Ladungsträger nach Anspruch 1,
**dadurch gekennzeichnet,**
**dass** an der Zentriervorrichtung (ZV) Schrägen für den Einschub und/oder die Aufschichtung von Paletten vorgesehen sind.

3. Verfahrbarer Ladungsträger nach Anspruch 1 oder 2,
**dadurch gekennzeichnet,**
**dass** beim Stapeln mehrerer Ladungsträger die Vorsprünge der Zentriervorrichtung (ZV) jeweils eines Ladungsträgers in Rücksprünge des Korpus des jeweils aufgestapelten Ladungsträgers (RP) formschlüssig eingreifend ausgebildet sind.

4. Verfahrbarer Ladungsträger nach einem der vorigen Ansprüche,
**dadurch gekennzeichnet,**
**dass** die Zentriervorrichtung (ZV) sich farblich vom Ladungsträger (RP) unterscheidet.

5. Verfahrbarer Ladungsträger nach einem der vorigen Ansprüche,
**dadurch gekennzeichnet,**
**dass** die Zentriervorrichtung (ZV) als Tiefziehschale ausgebildet ist.

6. Verfahrbarer Ladungsträger nach den Ansprüchen 1 bis 4,
**dadurch gekennzeichnet,**
**dass** die Zentriervorrichtung (ZV) durch Führungselemente ausgebildet ist.

7. Verfahrbarer Ladungsträger nach einem der vorigen Ansprüche,
**dadurch gekennzeichnet,**
**dass** die Fahrrollen jeweils eines Ladungsträgers (RP) beim Aufstapeln mehrerer Ladungsträger (RP) jeweils in Aussparungen des Korpus des jeweils aufgestapelten Ladungsträgers (RP) eingreifend ausgebildet sind.
